# EUROPEAN PATENT APPLICATION

(11) **EP 1 173 011 A1**
(43) Date of publication of application: **16.01.2002**
(21) Application number: 01305764.1
(22) Date of filing: 04.07.2001
(51) Int. Cl.: H04N 5/445

(54) **Television system**

(30) Priority: 12.07.2000 GB 0016958
(71) Applicant: Pace Micro Technology PLC, Shipley, West Yorkshire BD18 3LF (GB)
(72) Inventor: Turner, William, Waterbeach, Cambridge, CB5 9QU (GB)
(74) Representative: Wood, Graham

(57) **Abstract**

A television system includes a display screen (2) and a broadcast data receiver (4) for receiving digital data via terrestrial, cable or digital means from a broadcaster (6) and generating visual/audio and/or auxiliary data therefrom. The broadcaster (6) and/or broadcast data receiver (4) is provided with memory for storing programme information, which can include subtitle and/or closed caption data. The television system is provided with a search tool/facility to allow a user to search the memory by generating a user request for programme information. The television system is capable of matching the user request with any corresponding programme information in the memory for display on the display screen (2).

## Description

This invention relates to a television system.

A television system hereinafter described includes a broadcast data receiver (called a set top box) for receiving digital data via terrestrial, cable or digital means, transmitted from a broadcaster at a remote location. The digital data results in a large number of channels and programs available for selection by a user. Conventional listing means for the large number of channels and programs are inadequate and this has resulted in the development of Electronic Programme Guides (EPGs).

A user will typically select a programme to watch on the television system based on whether the content of the programme is of interest to them. Conventionally a user obtains information relating to the content of the programme using an EPG or via a television guide in a paper format. This information is typically in the form of a short, brief summary. The summary is likely to have been composed by a third party who may not share similar interests to that of the user, and thus not include information which the user may find of use for deciding whether the programme is of interest to them. Therefore, the conventional summaries provided in TV listings do not generally encapsulate sufficient information for a user to determine whether a programme is of interest to them.

For example, a segmented programme (i.e., Tomorrow's World) will typically trailer/advertise one or two major segments of the programme, prior to the showing of the programme, in order to inform the viewers as to the general theme of that particular show. However, a viewer may be interested in a smaller, minor segment of the show which is not advertised or shown as a trailer prior to the showing of the programme. The user may decide not to watch the show based on the advertisement and may miss the minor segment which is of interest to them.

It is therefore an aim of the present invention to overcome the abovementioned problem and to provide a user with a means of finding further information relating to a programme if required.

According to a first aspect of the present invention there is provided a television system including a display screen, a broadcast data receiver for receiving digital data via terrestrial, cable or digital means from a broadcaster and generating audio/visual and/or auxiliary data therefrom, said television system including memory means for storing data relating to programme information characterised in that said television system is provided with a search facility to allow a user to search said memory means by generating a user request for programme information, and said television system is capable of matching the request with any corresponding programme information in the memory for display on said display screen.

Preferably the memory means contains subtitle and/or closed caption data relating to programme information.

Further preferably the memory means is supplemented with descriptions of programmes where subtitles are not provided in advance. For example, programmes such as Live News Broadcasts.

Preferably a user query box is provided on the display screen for a user to type in their request, which they wish to be searched. The criteria typically can comprise key words, phrases, codes defined by the broadcaster and/or the like.

In one embodiment the memory means is located at the broadcaster station. The broadcaster typically updates the memory with future and real time programme information to form a database accessible by a user using the search tool. Advantages of providing the memory means at the broadcaster end/video server is that more computing power can be applied for searching, thus resulting in faster searching and more efficient use of processor time. In addition, the memory available at the broadcaster end is larger and so more data can be stored for searching.

Once a search match with the user's request has been identified in the broadcast end memory, the matched information is sent to the broadcast data receiver for display on the display screen connected thereto.

In one embodiment the memory means is located in the broadcast data receiver. The broadcaster can send programme information to the broadcast data receiver for storage in the memory means at pre-determined intervals. The programme information can relate to future programmes and/or real time programmes. The programme information can be stored in the memory means until the programme has been shown on the display screen.

Preferably the programme information to which the identified request criteria are matched can include the time and date of showing of the programme containing the criteria, the length of the programme, the channel the programme is to be shown thereon, a summary of the programme to be shown and/or the like.

Preferably the format of the programme information displayed on the display screen in response to a user's query is determined by the broadcaster. Alternatively, the format can be determined by the user and can be selected from a drop down menu or similar.

In one embodiment frequently requested information is stored in the memory in a saved format such that the time taken to search a query containing such information is reduced.

According to a second aspect of the present invention there is provided a television system including a display screen, a broadcast data receiver for receiving digital data via terrestrial, cable or digital means from a broadcaster and generating visual/audio and/or auxiliary data therefrom, said broadcaster including memory means for storing subtitle and/or closed caption data relating to programme information characterised in that said television system is provided with a search facility to allow a user to search said memory means by generating a user request for programme information, and said television system is capable of matching the request with any corresponding programme information in said memory for display on said display screen.

Preferably all, or selective data contained in the memory means at the broadcaster is sent to a memory means at the broadcast data receiver for searching by a user.

According to a further aspect of the present invention there is provided a method of obtaining programme information in a television system in response to a user's query, said television system including a display screen, a broadcast data receiver for receiving digital data via terrestrial, cable or digital means from a broadcaster and generating visual/audio and/or auxiliary data therefrom, said television system including memory means for storing data relating to programme information characterised in that said method includes the steps of inputting a query into said television system, searching said memory means for programme information relating to said query, displaying on said display screen identified programme information corresponding to said query.

Preferably the stored data is subtitle and/or closed caption data.

Preferably the memory which is searched is provided at the broadcaster end and information matching with the user's request is transmitted from the broadcaster to the receiver for display on the display screen conntected thereto.

An advantage of the present invention is that it provides the user with access to a large amount of information, which is already present in databases, which is unbiased information, and which includes programme specific data such as subtitle and closed-caption text, as well as verbose descriptions of programmes that do not carry subtitle/closed-caption data. Thus the present invention combines the resource of subtitle/closed caption data with Internet style search engine tools, such as Natural Language Processing (NLP) to allow the user to identify which programmes are likely to be of interest to them.

An embodiment of the present invention will now be described with reference to the accompanying figure, wherein:

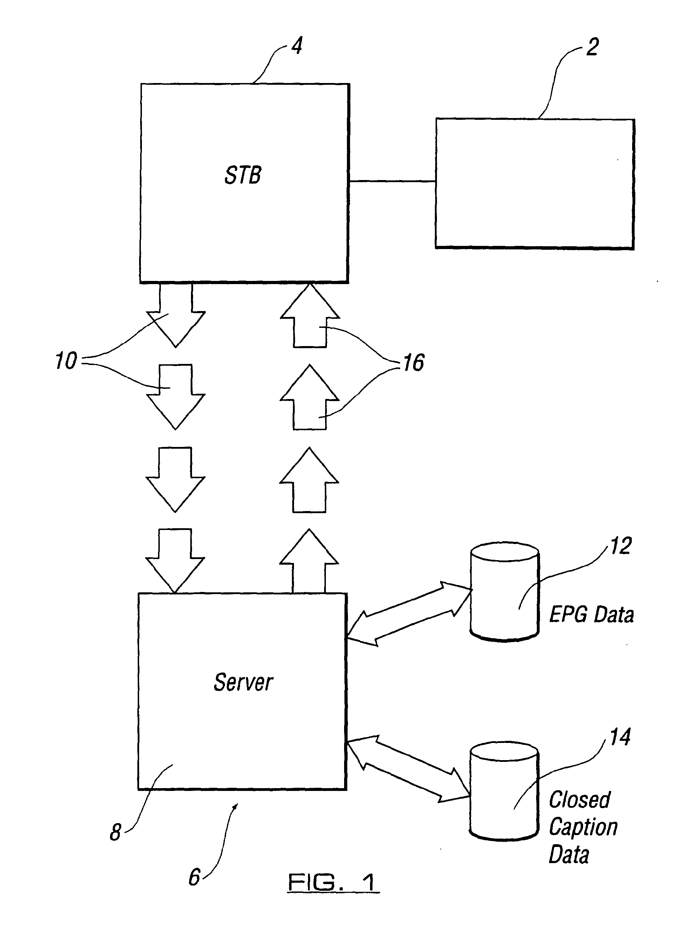

Figure 1 is a schematic diagram showing the steps of the present invention.

Referring to Figure 1 there is shown a television system comprising a display screen 2 communicating with a broadcast data receiver in the form of a set top box 4 and a broadcaster 6.

A user inputs a query into the set top box 4 using a keyboard (not shown) via a user's query box provided on display screen 2.

A remote control, joystick and/or the like can also be used to input a query into the set top box.

The user's query is sent to a server 8 located at broadcast station 6, as shown by arrows 10. The server 8 processes the query expression to identify criteria on which the search is to be undertaken. The server 8 then searches EPG and/or closed caption databases 12 and 14 respectively for matches to the determined criteria. Programme information containing the matched criteria is cross referenced with EPG data to produce the resulting programme or programmes and details of the same are sent from the server 8 to the set top box 4 for display on display screen 2, as shown by arrows 16.

The results to the user's query can be displayed in a form that the user can browse and select programmes to watch and record. The display format can be selected by the user from a drop down menu or the display format can be determined by the broadcaster.

For example, a user may send a query to the server requesting information as to "what programmes are on this evening relating to cars". The server processes this request and searches the subtitle/closed caption database for information relating to the key words "cars" and "this evening". Any programme information found containing the key words is matched with information from the EPG database and EPG format data is returned to the set top box for display on the display screen. For example, the information returned may include the name of a programme containing the requested information, the channel on which the programme is to be shown, the time of the programme, the length of the programme, a brief summary of what the programme is about and/or the like.

Thus it can be seen that the present invention provides a link between search engine technology and subtitle/closed caption data for use with a television system to allow a user to identity which programmes are of interest to them.

## Claims

1. A television system including a display screen (2), a broadcast data receiver (4) for receiving digital data via terrestrial, cable or digital means from a broadcaster (6) and generating visual/audio and/or auxiliary data therefrom, said television system including memory means for storing data relating to programme information **characterised in that** said television system is provided with a search facility to allow a user to search said memory means by generating a user request for programme information, and said television system is capable of matching the request with any corresponding programme information in said memory for display on said display screen (2).

2. A television system according to claim 1 **characterised in that** the memory means contains subtitle and/or closed caption data (14) relating to programme information.

3. A television system according to claim 1 **characterised in that** said memory means contains descriptions of programmes.

4. A television system according to claim 1 **characterised in that** a user query box is provided on the display screen (2) for a user to type in their search request.

5. A television system according to claim 1 **characterised in that** said user request includes any or any combination of key words, phrases or codes defined by the broadcaster (6).

6. A television system according to claim 1 **characterised in that** said memory means is located at the broadcaster (6).

7. A television system according to claim 1 **characterised in that** said memory means forms part of the broadcast data receiver (4).

8. A television system according to claim 6 or 7 **characterised in that** said broadcaster (6) updates said memory means with future and/or real time programme information.

9. A television system according to claim 1 **characterised in that** the programme information identified corresponding to the user's request includes any or any combination of the time and/or date of showing the identified programme, the length of the programme, the channel the programme is to be shown or a summary or the programme shown.

10. A television system according to claim 1 **characterised in that** the programme information identified corresponding to a user's request includes electronic programme guide (12) information.

11. A television system according to claim 1 **characterised in that** the format of the programme information identified in response to said user's query is determined by the broadcaster (6).

12. A television system according to claim 1 **characterised in that** the format of the programme information identified in response to said user's query is determined by the user and is selectable via an options menu.

13. A television system according to claim 1 **characterised in that** frequently requested information is stored in said memory means in a saved format.

14. A television system including a display screen (2) , a broadcast data receiver (4) for receiving digital data via terrestrial, cable or digital means from a broadcaster (6) and generating visual/audio and/or auxiliary data therefrom, said broadcaster (6) including memory means for storing subtitle and/or closed caption data (14) relating to programme information **characterised in that** said television system is provided with a search facility to allow a user to search said memory means by generating a user request for programme information, and said television system is capable of matching the request with any corresponding programme information in said memory for display on said display screen (2).

15. A television system according to claim 14 **characterised in that** all or selective data contained in said memory means at said broadcaster (6) is sent to memory means in said broadcast data receiver (4) for searching by a user.

16. A method of obtaining programme information in a television system in response to a user's query, said television system including a display screen (2), a broadcast data receiver (4) for receiving digital data via terrestrial, cable or digital means from a broadcaster (6) and generating visual/audio and/or auxiliary data therefrom, said television system including memory means for storing data relating to programme information **characterised in that** said method includes the steps of inputting a query into said television system, searching said memory means for programme information relating to said query, displaying on said display screen (2) identified programme information corresponding to said query.

17. A method according to claim 16 **characterised in that** said stored programme information includes subtitle and/or closed caption data (14).

18. A method according to claim 16 **characterised in that** the memory means searched is located at the broadcaster (6).

19. A method according to claim 16 **characterised in that** the memory searched is located at the broadcast data receiver (4).
